# EUROPEAN PATENT APPLICATION

(11) **EP 4 454 953 A1**
(43) Date of publication of application: **30.10.2024**
(21) Application number: 23740115.3
(22) Date of filing: 17.01.2023
(51) Int. Cl.: B60R 13/04, F16B 11/00

(54) **BRIGHT STRIP BASED EDGE COVERING ASSEMBLY PRODUCT, AND METHOD FOR CONNECTING BRIGHT STRIP BASED EDGE COVERING ASSEMBLY PRODUCT AND EXTERNAL COMPONENT**

(30) Priority: 17.01.2022 CN 202210047587
(71) Applicant: Fuyao Glass Industry Group Co., Ltd., Fuzhou, Fujian 350300 (CN)
(72) Inventor: LI, Jing, Fuzhou, Fujian 350300 (CN); JIANG, Lixing, Fuzhou, Fujian 350300 (CN); LIN, Conglong, Fuzhou, Fujian 350300 (CN); OU, Xiuyong, Fuzhou, Fujian 350300 (CN)
(74) Representative: Patentanwälte Olbricht Buchhold Keulertz
(86) International application number: PCT/CN2023/072601
(87) International publication number: WO 2023/134774

(57) **Abstract**

Disclosed are bright strip based edge covering assembly product, and a method for connecting the bright strip based edge covering assembly product and an external component. The bright strip based edge covering assembly product comprises a strip-shaped body (11), and an edge covering soft rubber (111) which internally contains foaming pores and is arranged at an end portion of the strip-shaped body (11). The connecting method comprises: attaching an outer surface of the edge covering soft rubber of the bright strip edge covering assembly product to an end portion of the external component; and pressing the strip-shaped body and the external component, so as to compress the edge covering soft rubber. The appearance of the joint between the bright strip edge covering assembly product and the external component is flat and uniform, and a gap therebetween is narrow.

## Description

### Technical Field

The present invention relates to the technical field of automobile decorations, and particularly to an encapsulated bright strip assembly and a connection method for the same and an external component.

### Background

With the development of automobile technologies, consumers have put forward higher requirements for the aesthetics of automobiles. As an automobile decorating part, the bright decorative strip of an automobile can improve the aesthetic degree of the automobile as a whole and improve the grade of the automobile, and is widely applied to medium and high-grade automobiles.

In the prior art, the bright decorative strip is generally integrated on a glass covering edge by post-installation or adhesion. In order to attract consumers to the greatest extent, automobile manufacturers have put forward various shapes of the bright decorative strips, including the modeling scheme of post-installing two bright decorative strips on the glass covering edge. The conventional treatment modes of the adjacent ends of two bright decorative strips are as follows: the adjacent ends are arranged side by side; and the adjacent ends are overlapped on top of each other. At present, the encapsulation assembly product with the post-installed bright decorative strip will be installed on an automobile body, and there is a matching relationship between an outer side of the bright decorative strip at a lower bottom edge and the body sheet metal.

In the prior art, in order to pursue the visual effect, it is usually required that the gaps between the bright decorative strips and between the bright decorative strip and the body sheet metal should be as small as possible. However, it is usually necessary to provide encapsulation soft rubber between two bright decorative strips and between the bright decorative strip and the body sheet metal, so as to prevent abnormal noise from being generated by the collision between the bright decorative strips and between the bright decorative strip and the body sheet metal in a travelling process of the automobile. But due to the limitation of the soft rubber injection molding process, the thickness of the soft rubber cannot be particularly thin (less than 0.8 mm). For the visual effect, the gap caused by the thick soft rubber is undesirable for automobile manufacturers.

The EPDM foaming material can play a buffering role between the bright decorative strips and between the bright decorative strip and the body sheet metal, but the application of this material in the glass encapsulation assembly product has the following limitations: 1. the appearance of this material is obviously different from that of the encapsulation soft rubber, while the gaps between the bright decorative strips and gaps between the bright decorative strip and the body sheet metal are all visible in appearance. Thus, if the EPDM foaming material is directly applied into the above gaps, the consumers can clearly perceive an appearance difference between the EPDM foaming material and the encapsulation soft rubber in other areas visible in appearance; 2. the conventional binding mode for the EPDM foaming material and the encapsulation soft rubber is an adhesion by a double-sided adhesive tape; due to certain operational complexity of this mode, it cannot be used in areas with high requirements for fineness, such as those areas between the bright decorative strips and between the bright decorative strip and the body sheet metal.

### Summary

In order to solve the above problems, the present invention aims to provide an encapsulated bright strip assembly and a connection method for the same and an external component. The width of a gap generated when the encapsulated bright strip assembly is connected to the external component is 0.8 mm or less, and the appearance of a joint between the assembly product and the automobile body or the bright decorative strip is flat and uniform without obvious difference.

In order to achieve the above objective, the present invention provides a bright strip encapsulation assembly product, comprising a strip-shaped main body and an encapsulation soft rubber, wherein the encapsulation soft rubber is disposed at an end of the strip-shaped main body to realize attachment between the strip-shaped main body and the external component, and the encapsulation soft rubber comprises a foaming area inside.

Compared with the prior art in which the strip-shaped main body such as a bright decoration strip is connected to a connecting component (e.g., an encapsulation material, a bright decorative strip, etc.) of the automobile body by an independent encapsulation soft rubber, the present invention can effectively reduce the width of the gap between the strip-shaped main body and the external connecting component while ensuring firm and accurate connection therebetween, by pre-injection molding a compressible deformable encapsulation soft rubber material in a connecting area of the strip-shaped main body.

The bright strip provided by the present invention is a post-installed one which is not connected to a specific object in advance during manufacturing but is attached to the specific object after the whole manufacturing is completed and at the time of application.

During specific implementations of the present invention, the encapsulation soft rubber includes a foaming area inside, and foaming holes are evenly distributed in the foaming area. When two encapsulation assembly products are connected to the external component, the air in the foaming holes is squeezed out under the action of an external extrusion force, and the overall volume occupied by the encapsulation soft rubber decreases, which is reflected by the simultaneous deformations of all parts of the encapsulation soft rubber, and the deformed encapsulation soft rubber can fully fill the gap at a joint between the strip-shaped main body and the external component, thereby reducing the width of the residual gap. In some specific implementations, when the encapsulation soft rubber is in a free state, the foaming area inside the encapsulation soft rubber has a foaming density of 10-400 kg/m³, for example 10-200 kg/m³, and the foaming density in this range can make the encapsulation soft rubber have a sufficient extrusion deformation capacity.

During specific implementations of the present invention, the encapsulation soft rubber is provided with a foaming area inside, while the outer surface thereof is smooth without bubbles, so as to ensure that the encapsulation soft rubber has a capability of deformation under stress and avoid an appearance difference between the strip-shaped main body of the present invention and the connected external component (e.g., the bright decorative strip of the automobile or the encapsulation soft rubber of the automobile body). For example, when the external component is the encapsulation soft rubber of automobile glass, the surface of the encapsulation soft rubber of the present invention is smooth without bubbles, and made of the same material as the above encapsulation soft rubber without a difference in appearance therebetween. In addition, the encapsulated bright strip assembly of the present invention can be closely attached to the external component, and the connection position is precise and accurate.

The material of the encapsulation soft rubber may be a TPE soft rubber material, a PVC soft rubber material, a PU soft rubber material, etc. These materials can play a buffering role, and the surface is smooth without bubbles.

During specific implementations of the present invention, when the encapsulation soft rubber is in a free state, the encapsulation soft rubber generally has a thickness of 1 mm to 10 mm, for example 3 mm to 6 mm. In a compressed state, the air in the foaming area inside the encapsulation soft rubber is exhausted, the overall volume of the encapsulation soft rubber is compressed, and the thickness of the encapsulation soft rubber may be reduced to 0.8 mm or less at this time.

During specific implementations of the present invention, the length of a long side of the encapsulation soft rubber may be controlled to be 1 mm or more.

During specific implementations of the present invention, the strip-shaped main body and the encapsulation soft rubber are generally fixed by injection molding to ensure the firm connection therebetween. Specifically, the encapsulation soft rubber may be injection-molded onto an end of the strip-shaped main body.

During specific implementations of the present invention, the position of the encapsulation soft rubber on the strip-shaped body may be adjusted according to the actual connection needs of the encapsulation soft rubber and the external component. For example, the strip-shaped main body may be connected to the external component through a part or the entire of strip-shaped main body's surface, and accordingly, the encapsulation soft rubber may partially or completely wrap the end of the strip-shaped main body.

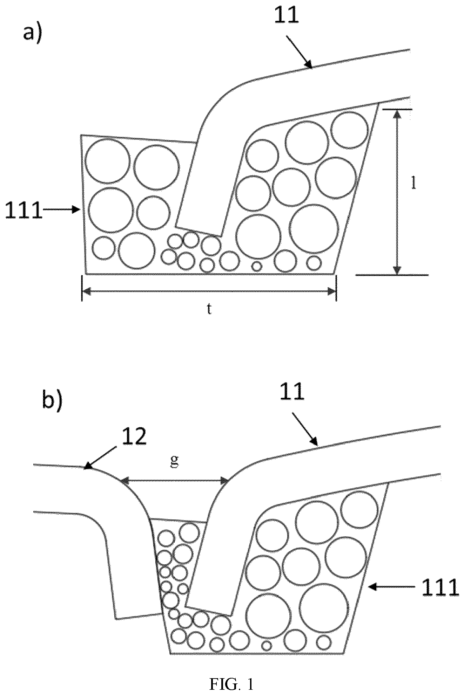

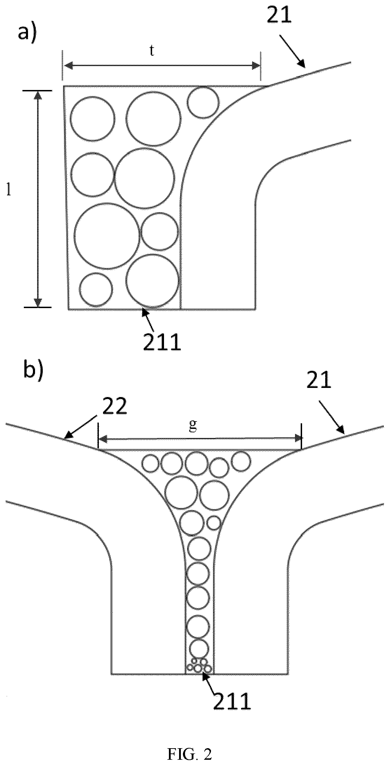

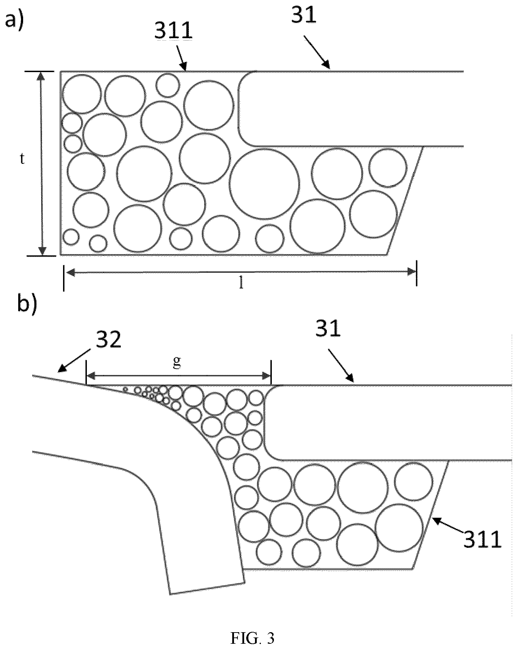

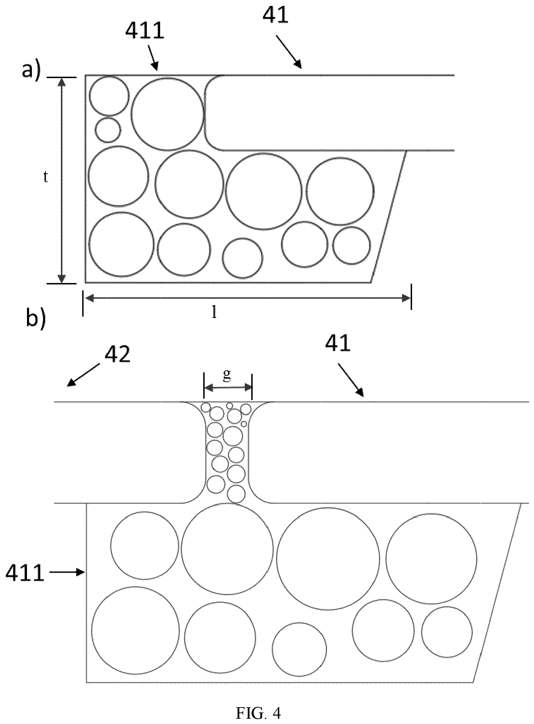

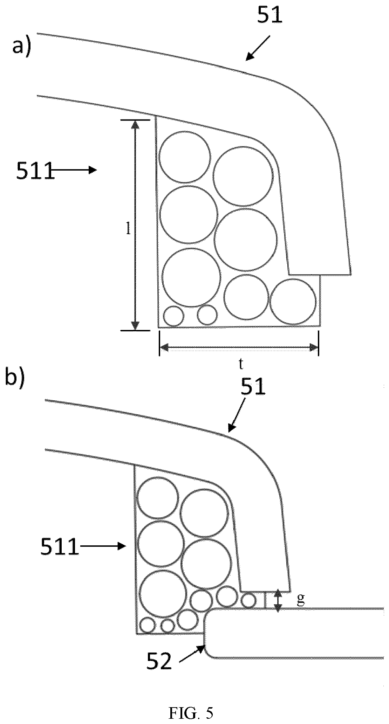

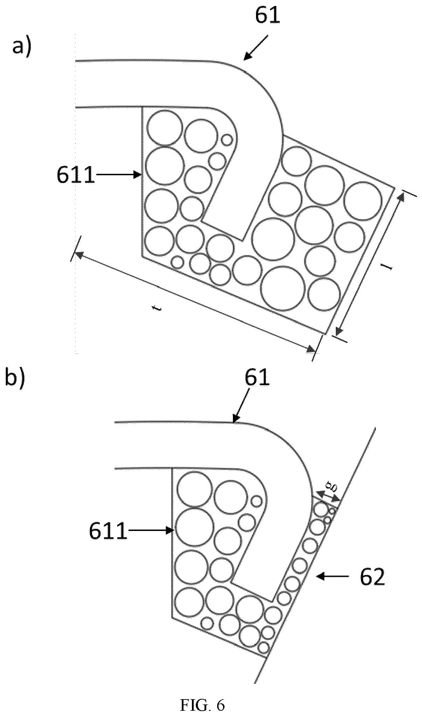

During specific implementations of the present invention, the shape of the end of the strip-shaped main body may be adjusted according to the actual connection needs, and specifically, the end of the strip-shaped main body may be straight, bent or the like. For example, when the external component to be connected is strip-shaped and bent, the end of the strip-shaped main body may be bent (see FIG. 1 and FIG. 2) or straight (see FIG. 3 and FIG. 4), and the encapsulation soft rubber may completely wrap the end of the strip-shaped main body (see FIG. 1) or partially wrap the end of the strip-shaped main body (see FIG. 2, FIG. 3 and FIG. 4). When the external component to be connected is strip-shaped and straight, the end of the strip-shaped main body may be bent or straight (see FIG. 5), and the encapsulation soft rubber may completely or partially wrap the end of the strip-shaped main body (see FIG. 5). When the external component is a plane, the encapsulation soft rubber may be straight or bent (see FIG. 6), and the encapsulation soft rubber may completely or partially wrap the end of the strip-shaped body (see FIG. 6).

During specific implementations of the present invention, the encapsulated bright strip assembly may be used for automobile decorations, and accordingly, the strip-shaped main body may be a bright decorative strip. The material and the thickness of the bright decorative strip are not particularly limited, and the bright decorative strip may be any bright decorative strip which can be fixed with the encapsulation soft rubber material by means of injection molding, such as a stainless steel bright decorative strip, an aluminum alloy bright decorative strip, a plastic decorative strip, etc., which are conventional.

The present invention further provides a connection method for the encapsulated bright strip assembly and an external component. During specific implementations, the method may include: attaching an outer surface of the encapsulation soft rubber of the encapsulated bright strip assembly to an end of the external component, so that the encapsulated bright strip assembly is connected to the external component; and pressing the strip-shaped main body and the external component to compress the encapsulation soft rubber until a distance between the strip-shaped main body and the external component is 0.8 mm or less (e.g., 0.1 mm to 0.5 mm), stop pressing, thereby completing a connection between the encapsulated bright strip assembly and the external component.

During specific implementations of the present invention, a connection mode for the encapsulated bright strip assembly and the external component is flexible, which may be a side-by-side connection or a staggered overlapping connection. Specifically, the connection mode for the encapsulated bright strip assembly and the external component may include bending butting (see FIGS. 1 and 2), beveling butting (see FIGS. 3 and 6), end butting (see FIG. 4), partial overlapping (see FIG. 5), etc.

The present invention has the advantageous effects that the width of the gap generated in the connection between the encapsulated bright strip assembly provided by the present invention and the external component such as an automobile body, an automobile bright decorative strip or the like can reach 0.8 mm or less, while the appearance at a joint can be ensured to be smooth and uniform without obvious difference.

### Brief Description of the Drawings

FIG. 1 illustrates a schematic diagram of a structure of an encapsulated bright strip assembly in Embodiment 1 and a schematic diagram of a position where the product is attached to an external bright decorative strip.
FIG. 2 illustrates a schematic diagram of a structure of an encapsulated bright strip assembly in Embodiment 2 and a schematic diagram of a position where the product is attached to an external bright decorative strip.
FIG. 3 illustrates a schematic diagram of a structure of an encapsulated bright strip assembly in Embodiment 3 and a schematic diagram of a position where the product is attached to an external bright decorative strip.
FIG. 4 illustrates a schematic diagram of a structure of an encapsulated bright strip assembly in Embodiment 4 and a schematic diagram of a position where the product is attached to an external bright decorative strip.
FIG. 5 illustrates a schematic diagram of a structure of an encapsulated bright strip assembly in Embodiment 5 and a schematic diagram of a position where the product is attached to an external bright decorative strip.
FIG. 6 illustrates a schematic diagram of a structure of an encapsulated bright strip assembly in Embodiment 6 and a schematic diagram of a position where the product is attached to an automobile body plane.

### Description of the reference signs

11: first bright decorative strip; 12: second bright decorative strip; 111: encapsulation soft rubber;
21: first bright decorative strip; 22: second bright decorative strip; 211: encapsulation soft rubber;
31: first bright decorative strip; 32: second bright decorative strip; 311: encapsulation soft rubber;
41: first bright decorative strip; 42: second bright decorative strip; 411: encapsulation soft rubber;
51: first bright decorative strip; 52: second bright decorative strip; 511: encapsulation soft rubber;
61: first bright decorative strip; 62: automobile body plane; 611: encapsulation soft rubber;
t: thickness of an encapsulation soft rubber; l: length of an encapsulation soft rubber; g: width of a gap between a strip-shaped main body in an encapsulated bright strip assembly and an external component.

### Detailed Description of the Preferred Embodiments

In order to achieve a clearer understanding of the technical features, objectives and advantageous effects of the present invention, the technical solutions of the present invention are described in detail below, which should not be understood as limitations to the applicable scope of the present invention.

It should be understood that the orientations or positional relationships indicated by the terms such as "upper", "lower", "inner", "outer" and "horizontal" are based on those shown in the drawings, and are only for the convenience of describing the present invention and simplifying the description, rather than indicating or implying that a structure referred to must have a specific orientation, or be constructed and operated in a specific orientation. Thus, the above terms should not be understood as limitations to the present invention.

The material of the bright decorative strip in the following embodiments is not limited, and for example may be an aluminum bright decorative strip with a thickness of 1.2 mm.

### Embodiment 1

This embodiment provides a bright strip encapsulation assembly product, the structure of which is shown in a) of FIG. 1. Specifically, the product includes an encapsulation soft rubber 111 and a first bright decorative strip 11 that serves as a strip-shaped main body.

The encapsulation soft rubber 111 has a smooth and flat outer surface and a foaming area inside, wherein the foaming area includes evenly distributed foaming holes. In a free state, the foaming area has a foaming density of 10-400 kg/m³ (preferably 10-200 kg/m³). The encapsulation soft rubber 111 in the free state has an overall thickness of 1 mm to 10 mm (preferably 3 mm to 6 mm). The material of the encapsulation soft rubber 111 may be a TPE soft rubber material, a PVC soft rubber material, a PU soft rubber material, etc.

An end of the first bright decorative strip 11 is bent, and the encapsulation soft rubber is fixed to the end of the first bright decorative strip 11 by injection molding. The encapsulation soft rubber 111 completely wraps the end of the first bright decorative strip 11, while wrapping an outer side, an inner side and an end face of the bent end of the first bright decorative strip 11.

This embodiment further provides a connection method for the encapsulated bright strip assembly and an external bright decorative strip, which includes fixedly attaching the product to one external bright decorative strip (hereinafter referred to as a second bright decorative strip), and specifically includes the following steps:
1. taking the second bright decorative strip 12 as an object to be attached to, which has a bent end;
2. adjusting a bending direction of the end of the second bright decorative strip 12, so that a bent portion of the end of the second bright decorative strip 12 is opposite to a bent portion of the end of the first bright decorative strip 11; attaching the outer surface of the encapsulation soft rubber 111 located outside the end of the first bright decorative strip 11 to an outer side of the bent end of the second bright decorative strip 12, so that the bent end of the first bright decorative strip 11 and the bent end of the second bright decorative strip 12 are arranged side by side after the attaching, i.e., the bent portions thereof are opposite to each other;
3. pressing the first bright decorative strip 11 and the second bright decorative strip 12 inward to compress the encapsulation soft rubber 111 therebetween until a width of a gap between the first bright decorative strip 11 and the second bright decorative strip 12 reaches 0.8 mm or less (at this time, a thickness of the encapsulation soft rubber 111 is also reduced to be 0.8 mm or less), stopping pressing, thereby completing a process of attaching the bright decorative strip encapsulation assembly product to the second bright decorative strip.

b) of FIG. 1 illustrates a schematic diagram of a position where the encapsulated bright strip assembly is attached to the second bright decorative strip. As can be seen from b) of FIG. 1, after the attaching, the encapsulation soft rubber 111 located outside the bent portion of the first bright decorative strip 11 fills the gap between the first bright decorative strip 11 and the second bright decorative strip 12, and the outer surface of the encapsulation soft rubber 111 at the gap (the surface exposed by the gap) is flat and smooth. Since the foaming area inside the encapsulation soft rubber at the gap is in a compressed state, the volume occupied by the encapsulation soft rubber can be effectively reduced, thereby reducing the width of the gap between the first bright decorative strip and the second bright decorative strip.

### Embodiment 2

This embodiment provides a bright strip encapsulation assembly product, the structure of which is shown in a) of FIG. 2. Specifically, the product includes an encapsulation soft rubber 211 and a first bright decorative strip 21 that serves as a strip-shaped main body.

The encapsulation soft rubber 211 has a smooth and flat outer surface and a foaming area inside, wherein the foaming area includes evenly distributed foaming holes. In a free state, the foaming area has a foaming density of 10-400 kg/m³ (preferably 10-200 kg/m³). The encapsulation soft rubber 211 in the free state has an overall thickness of 1 mm to 10 mm (preferably 3 mm to 6 mm). The material of the encapsulation soft rubber 211 may be a TPE soft rubber material, a PVC soft rubber material, a PU soft rubber material, etc.

An end of the first bright decorative strip 21 is bent, and the encapsulation soft rubber 211 is fixed to the end of the first bright decorative strip 21 by injection molding. The encapsulation soft rubber 211 partially wraps the end of the first bright decorative strip 21. Specifically, the encapsulation soft rubber 211 only wraps an outer side of the bent end of the first bright decorative strip 21, and a lower surface of the encapsulation soft rubber 211 is flush with an end face of the end of the first bright decorative strip 21.

This embodiment further provides a connection method for the encapsulated bright strip assembly and an external bright decorative strip, which includes fixedly attaching the product to a second bright decorative strip, and specifically includes the following steps:
1. taking the second bright decorative strip 22 as an object to be attached to, which has a bent end;
2. adjusting a bending direction of the end of the second bright decorative strip 22, so that a bent portion of the end of the second bright decorative strip 22 is opposite to a bent portion of the end of the first bright decorative strip 21; attaching the outer surface of the encapsulation soft rubber 211 located outside the end of the first bright decorative strip 21 to an outer side of the bent end of the second bright decorative strip 22, so that the bent end of the first bright decorative strip 21 is parallel to the bent portion of the second bright decorative strip 22, with the outer sides thereof opposite to each other and the end faces thereof flush with each other;
3. pressing the first bright decorative strip 21 and the second bright decorative strip 22 inward to compress the encapsulation soft rubber 211 therebetween until a width of a gap between the first bright decorative strip 21 and the second bright decorative strip 22 reaches 0.8 mm or less, thereby completing a process of attaching the bright decorative strip encapsulation assembly product to the second bright decorative strip.

b) of FIG. 2 illustrates a schematic diagram of a position where the encapsulated bright strip assembly is attached to the second bright decorative strip. As can be seen from b) of FIG. 2, after the attaching, the encapsulation soft rubber 211 located outside the bent portion of the first bright decorative strip 21 fills the gap between the first bright decorative strip 21 and the second bright decorative strip 22, and the outer surface of the encapsulation soft rubber 211 at the gap is flat and smooth. Since the foaming area inside the encapsulation soft rubber at the gap is in a compressed state, the volume occupied by the encapsulation soft rubber can be effectively reduced, thereby reducing the width of the gap between the first bright decorative strip and the second bright decorative strip.

### Embodiment 3

This embodiment provides a bright strip encapsulation assembly product, the structure of which is shown in a) of FIG. 3. Specifically, the product includes an encapsulation soft rubber 311 and a first bright decorative strip 31 that serves as a strip-shaped main body.

The encapsulation soft rubber 311 has a smooth and flat outer surface and a foaming area inside, wherein the foaming area includes evenly distributed foaming holes. In a free state, the foaming area has a foaming density of 10-400 kg/m³ (preferably 10-200 kg/m³). The encapsulation soft rubber 311 in the free state has an overall thickness of 1 mm to 10 mm (preferably 3 mm to 6 mm). The material of the encapsulation soft rubber 311 may be a TPE soft rubber material, a PVC soft rubber material, a PU soft rubber material, etc.

An end of the first bright decorative strip 31 is straight, and the encapsulation soft rubber 311 is fixed to the end of the first bright decorative strip 31 by injection molding. The encapsulation soft rubber 311 partially wraps the end of the first bright decorative strip 31. Specifically, the encapsulation soft rubber 311 only wraps a lower side and an end face of the first bright decorative strip 31, and an upper surface of the encapsulation soft rubber 311 is flush with an upper surface of the end of the first bright decorative strip 31.

This embodiment further provides a connection method for the encapsulated bright strip assembly and an external bright decorative strip, which includes fixedly attaching the product to a second bright decorative strip, and specifically includes the following steps:
1. taking the second bright decorative strip 32 as an object to be attached to, which has a bent end;
2. placing the first bright decorative strip 31 horizontally, adjusting a bending direction of the second bright decorative strip 32 downward, and attaching an outer surface of the encapsulation soft rubber 311 parallel to the end face of the first bright decorative strip 31 to an outer side of the whole bent end of the second bright decorative strip 32, so that the end of the first bright decorative strip 31 is attached to the bent end of the second bright decorative strip 32 at an inclination angle, wherein an outer side of the end of the first bright decorative strip 31 forms an included angle close to 90° with a bent portion of the second bright decorative strip 32;
3. pressing the first bright decorative strip 31 and the second bright decorative strip 32 inward to compress the encapsulation soft rubber 311 therebetween until a width of a gap between attached portions of the first bright decorative strip 31 and the second bright decorative strip 32 reaches 0.8 mm or less, thereby completing a process of attaching the bright decorative strip encapsulation assembly product to the second bright decorative strip.

b) of FIG. 3 illustrates a schematic diagram of a position where the encapsulated bright strip assembly is attached to the second bright decorative strip 32. As can be seen from b) of FIG. 3, after the attaching, the encapsulation soft rubber 311 located at the end of the first bright decorative strip 31 fills the gap between the first bright decorative strip 31 and the second bright decorative strip 32, and the outer surface of the encapsulation soft rubber 311 at the gap is flat and smooth. Since the foaming area inside the encapsulation soft rubber at the gap is in a compressed state, the volume occupied by the encapsulation soft rubber can be effectively reduced, thereby reducing the width of the gap between the first bright decorative strip and the second bright decorative strip.

### Embodiment 4

This embodiment provides a bright strip encapsulation assembly product, the structure of which is shown in a) of FIG. 4, which is the same as the structure of the encapsulated bright strip assembly in Embodiment 3, including an encapsulation soft rubber 411 and a first bright decorative strip 41 that serves as a strip-shaped main body.

This embodiment further provides a connection method for the encapsulated bright strip assembly and an external bright decorative strip, which includes fixedly attaching the product to one external bright decorative strip (hereinafter referred to as a second bright decorative strip), and specifically includes the following steps:
1. taking the second bright decorative strip 42 as an object to be attached to, which has a straight end;
2. placing the first bright decorative strip 41 and the second bright decorative strip 42 horizontally, adjusting an upper surface of the first bright decorative strip 41 to be flush with an upper surface of the second bright decorative strip 42, and attaching the outer surface of the encapsulation soft rubber 411 parallel to an end face of the first bright decorative strip 41 to an end face of the second bright decorative strip 42, so that the end of the first bright decorative strip 41 is oppositely attached to the end face of the second bright decorative strip 42;
3. pressing the first bright decorative strip 41 and the second bright decorative strip 42 inward to compress the encapsulation soft rubber 411 therebetween until a width of a gap between attached portions of the first bright decorative strip 41 and the second bright decorative strip 42 reaches 0.8 mm or less, thereby completing a process of attaching the bright decorative strip encapsulation assembly product to the second bright decorative strip.

b) of FIG. 4 illustrates a schematic diagram of a position where the encapsulated bright strip assemblyis attached to the second bright decorative strip. As can be seen from b) of FIG. 4, after the attaching, the encapsulation soft rubber 411 located at the end of the first bright decorative strip 41 fills the gap between the first bright decorative strip 41 and the second bright decorative strip 42, and the outer surface of the encapsulation soft rubber 411 at the gap is flat and smooth and flush with the outer sides of the first bright decorative strip 41 and the second bright decorative strip 42. Since the foaming area inside the encapsulation soft rubber at the gap is in a compressed state, the volume occupied by the encapsulation soft rubber can be effectively reduced, thereby reducing the width of the gap between the first bright decorative strip and the second bright decorative strip.

### Embodiment 5

This embodiment provides a bright strip encapsulation assembly product, the structure of which is shown in a) of FIG. 5. Specifically, the product includes an encapsulation soft rubber 511 and a first bright decorative strip 51 that serves as a strip-shaped main body.

The encapsulation soft rubber 511 has a smooth and flat outer surface and a foaming area inside, wherein the foaming area includes evenly distributed foaming holes. In a free state, the foaming area has a foaming density of 10-400 kg/m³ (preferably 10-200 kg/m³). The encapsulation soft rubber 511 in the free state has an overall thickness of 1 mm to 10 mm (preferably 3 mm to 6 mm). The material of the encapsulation soft rubber 511 may be a TPE soft rubber material, a PVC soft rubber material, a PU soft rubber material, etc.

An end of the first bright decorative strip 51 is bent, and the encapsulation soft rubber 511 is fixed to the end of the first bright decorative strip 51 by injection molding. The encapsulation soft rubber 511 partially wraps the end of the first bright decorative strip 51. Specifically, the encapsulation soft rubber 511 wraps an inner side and a part of an end face of the bent end of the first bright decorative strip 51.

This embodiment further provides a connection method for the encapsulated bright strip assembly and an external bright decorative strip, which includes fixedly attaching the product to a second bright decorative strip, and specifically includes the following steps:
1. taking the second bright decorative strip 52 as an object to be attached to, which has a straight end;
2. placing the second bright decorative strip 52 horizontally, adjusting a bending direction of the first bright decorative strip 51 downward, and attaching an outer surface of the encapsulation soft rubber 511 parallel to the end face of the first bright decorative strip 51 to an outer side of the end and an end face of the second bright decorative strip 52, so that the bent end face of the first decorative strip 51 and the upper surface of the end of the second decorative strip 52 are attached by being overlapped on top of each other;
3. pressing the first bright decorative strip 51 and the second bright decorative strip 52 in a vertical direction to compress the encapsulation soft rubber 511 therebetween until a width of a gap between attached portions of the first bright decorative strip 51 and the second bright decorative strip 52 reaches 0.8 mm or less, thereby completing a process of attaching the bright decorative strip encapsulation assembly product to the second bright decorative strip.

b) of FIG. 5 illustrates a schematic diagram of a position where the encapsulated bright strip assembly is attached to the second bright decorative strip. As can be seen from b) of FIG. 5, after the attaching, the encapsulation soft rubber 511 close to the end face of the first decorative strip 51 fills the gap between the first bright decorative strip 51 and the second bright decorative strip 52, and the outer surface of the encapsulation soft rubber 511 at the gap is flat and smooth. Since the foaming area inside the encapsulation soft rubber at the gap is in a compressed state, the volume occupied by the encapsulation soft rubber can be effectively reduced, thereby reducing the width of the gap between the first bright decorative strip and the second bright decorative strip.

### Embodiment 6

This embodiment provides a bright strip encapsulation assembly product, the structure of which is shown in a) of FIG. 6. Specifically, the product includes an encapsulation soft rubber 611 and a first bright decorative strip 61 that serves as a strip-shaped main body.

The encapsulation soft rubber 611 has a smooth and flat outer surface and a foaming area inside, wherein the foaming area includes evenly distributed foaming holes. In a free state, the foaming area has a foaming density of 10-400 kg/m³ (preferably 10-200 kg/m³). The encapsulation soft rubber 611 in the free state has an overall thickness of 1 mm to 10 mm (preferably 3 mm to 6 mm). The material of the encapsulation soft rubber 611 may be a TPE soft rubber material, a PVC soft rubber material, a PU soft rubber material, etc.

An end of the first bright decorative strip 61 is bent, and the encapsulation soft rubber 611 is fixed to the end of the first bright decorative strip 61 by injection molding. The encapsulation soft rubber 611 completely wraps the end of the first bright decorative strip 61. Specifically, the encapsulation soft rubber 611 wraps an outer side, an inner side and an end face of the bent end of the first bright decorative strip 61.

This embodiment further provides a connection method for the encapsulated bright strip assembly and an external bright decorative strip, which includes fixedly attaching the product to an automobile body plane, and specifically includes the following steps:
1. taking an automobile body plane 62 as an object to be attached to, and attaching the outer surface of the encapsulation soft rubber 611 of the bright decorative strip encapsulation assembly product of this embodiment parallel to the outer side of the first bright decorative strip 61 to the automobile body plane 62, so that the bent end of the first bright decorative strip 61 is attached to the automobile body plane 62 in parallel;
2. pressing the first bright decorative strip 61 to compress the encapsulation soft rubber 611 at attached portions of the first bright decorative strip 61 and the automobile body plane 62 until a width of a gap between the attached portions thereof reaches 0.8 mm or less, thereby completing a process of attaching the bright decorative strip encapsulation assembly product to the automobile body.

b) of FIG. 6 illustrates a schematic diagram of a position where the encapsulated bright strip assembly is attached to the automobile body. As can be seen from b) of FIG. 6, after the attaching, the encapsulation soft rubber 611 located outside the first bright decorative strip 61 fills the gap between the first bright decorative strip 61 and the automobile body plane 62, and the outer surface of the encapsulation soft rubber 611 at the gap is flat and smooth. Since the foaming holes inside the encapsulation soft rubber at the gap are in a compressed state, the volume occupied by the encapsulation soft rubber can be effectively reduced, thereby reducing the width of the gap between the first bright decorative strip and the automobile body.

In FIGS. 1 to 6, t represents a thickness of the encapsulation soft rubber, t=1 mm to 10 mm, l represents a length of the encapsulation soft rubber, l≥1 mm, g represents a width of the gap between the strip-shaped main body in the encapsulated bright strip assembly and the external component, and g≤0.8 mm.

As can be seen from the above embodiments, the encapsulated bright strip assembly provided by the present invention can be closely attached to external components such as the automobile body, the automobile bright decorative strip, etc., the width of the gap generated in the connection can be controlled to be 0.8 mm or less, and the appearance of a joint is flat and smooth without obvious difference.

## Claims

1. An encapsulated bright strip assembly, comprising a strip-shaped main body and an encapsulation soft rubber, wherein the encapsulation soft rubber is disposed at an end of the strip-shaped main body to realize attachment between the strip-shaped main body and an external component, and the encapsulation soft rubber comprises a foaming area inside.

2. The encapsulated bright strip assembly according to claim 1, wherein when the encapsulation soft rubber is in a free state, the foaming area inside the encapsulation soft rubber has a foaming density of 10-400 kg/m³.

3. The encapsulated bright strip assembly according to claim 1, wherein when the encapsulation soft rubber is in a free state, the foaming area inside the encapsulation soft rubber has a foaming density of 10-200 kg/m³.

4. The encapsulated bright strip assembly according to any one of claims 1 to 3, wherein when the encapsulation soft rubber is in a free state, the encapsulation soft rubber has a thickness of 1 mm to 10 mm.

5. The encapsulated bright strip assembly according to claim 4, wherein when the encapsulation soft rubber is in a free state, the encapsulation soft rubber has a thickness of 3 mm to 6 mm.

6. The encapsulated bright strip assembly according to any one of claims 1 to 5, wherein a long side of the encapsulation soft rubber has a length of 1 mm or more.

7. The encapsulated bright strip assembly according to any one of claims 1 to 6, wherein an outer surface of the encapsulation soft rubber is smooth.

8. The encapsulated bright strip assembly according to claim 7, wherein the material of the encapsulation soft rubber comprises one or combinations of a TPE soft rubber material, a PVC soft rubber material and a PU soft rubber material.

9. The encapsulated bright strip assembly according to any one of claims 1 to 8, wherein the encapsulation soft rubber is injection-molded onto an end of the strip-shaped body.

10. The encapsulated bright strip assembly according to claim 1 or 9, wherein the encapsulation soft rubber partially or completely wraps an end of the strip-shaped body.

11. The encapsulated bright strip assembly according to any one of claims 1, 9 and 10, wherein an end of the strip-shaped body is straight or bent.

12. The encapsulated bright strip assembly according to claim 11, wherein the strip-shaped main body comprises a bright decorative strip.

13. The encapsulated bright strip assembly according to claim 12, wherein the bright decorative strip comprises one or combinations of a stainless steel bright decorative strip, an aluminum alloy bright decorative strip and a plastic decorative strip.

14. A connection method for the encapsulated bright strip assembly according to any one of claims 1 to 13 and an external component, comprising: attaching an outer surface of the encapsulation soft rubber of the encapsulated bright strip assembly to an end of the external component, so that the encapsulated bright strip assemblyis connected to the external component; and pressing the strip-shaped main body and the external component to compress the encapsulation soft rubber until a distance between the strip-shaped main body and the external component is 0.8 mm or less, stop pressing, thereby completing a connection between the encapsulated bright strip assembly and the external component.

15. The connection method according to claim 14, wherein the distance between the strip-shaped body and the external component is 0.1 mm to 0.5 mm.

16. The connection method according to claim 14 or 15, wherein a connection mode for the encapsulated bright strip assembly and the external component comprises a side-by-side connection and a staggered overlapping connection.

17. The connection method according to claim 16, wherein the connection mode for the encapsulated bright strip assembly and the external component comprises one or combinations of bending butting, beveling butting, partial overlapping and end butting.
